# Europäisches Patentamt

# European Patent Office

# Office européen des brevets

(19)

(11) Veröffentlichungsnummer: **0 169 326**
**B1**

(12) ## EUROPÄISCHE PATENTSCHRIFT

(45) Veröffentlichungstag der Patentschrift:
08.03.89

(51) Int. Cl.⁴: **G 06 K 1/12,** B 29 C 59/02

(21) Anmeldenummer: **85106087.1**

(22) Anmeldetag: **17.05.85**

(54) Verfahren und Vorrichtung zur Erzeugung eines makroskopischen Flächenmusters mit einer mikroskopischen Struktur, insbesondere einer beugungsoptisch wirksamen Struktur.

(30) Priorität: **06.07.84 CH 3277/84**

(43) Veröffentlichungstag der Anmeldung:
**29.01.86 Patentblatt 86/5**

(45) Bekanntmachung des Hinweises auf die Patenterteilung:
**08.03.89 Patentblatt 89/10**

(84) Benannte Vertragsstaaten:
**AT BE DE FR GB IT NL SE**

(56) Entgegenhaltungen:
**DE-C-1 729 040**
**FR-A-2 401 484**
**GB-A-1 026 317**
**US-A-4 064 205**

**IBM TECHNICAL DISCLOSURE BULLETIN, Band 10, Nr. 6, November 1967, Seite 760, New York, US; F. HOLMSTROM u.a.: "Deformation recording method"**

(73) Patentinhaber: **LGZ LANDIS & GYR ZUG AG, CH-6301 Zug (CH)**

(72) Erfinder: **Antes, Gregor, Moussonstrasse 14, CH-8044 Zürich (CH)**

EP 0 169 326 B1

## Beschreibung

Die Erfindung bezieht sich auf ein Verfahren zur Erzeugung eines makroskopischen Flächenmusters mit einer mikroskopischen Struktur der im Oberbegriff des Anspruchs 1 genannten Art sowie auf eine Vorrichtung zur Durchführung des Verfahrens.

Solche Flächenmuster dienen beispielsweise als beugungsoptisches Sicherheitselement auf einem Dokument (EP-A-0 105 099). Sie können als geometrische Figur, Zahl, Buchstabe, Ornament, Guilloche usw. ausgebildet und z. B. durch Aneinanderreihen einer grossen Zahl beugungsoptischer Elemente zusammengesetzt sein. Diese Synthese lässt sich dadurch realisieren, dass beugungsoptische Strukturen durch interferometrische Überlagerung kohärenter Lichtstrahlen mit unterschiedlichen Einfallswinkeln erzeugt werden, die photolithographisch in ein Oberflächenmikroprofil umgesetzt werden (EP-A-0 105 099), wobei zur geometrischen Begrenzung der zu belichtenden Felder feste vorfabrizierte optische Masken verwendet werden können. Wenn das zu erzeugende Flächenmuster und seine mikroskopische Struktur einen bestimmten Grad an graphischer und struktureller Komplexität überschreitet, erweist sich die Maskentechnik als prohibitiv aufwendig. Ausserdem lassen sich beugungsoptische Strukturelemente mit asymmetrischem Profil, z. B. spezielle Sägezahnprofile, durch die genannte interferometrische Methode nicht erzeugen.

Es ist bekannt, beugungsoptisch wirksame Strukturen wie Phasenbeugungsgitter, Phasenhologramme und dergleichen durch Prägen in ein thermoplastisches Substrat mittels einer Prägematrize unter Anwendung von Druck und Wärme zu erzeugen (CH-PS 594 495). Die Synthese eines Flächenmusters mit beugungsoptisch wirksamer Struktur könnte daher auch dadurch erfolgen, dass durch wiederholtes Prägen in ein thermoplastisches Substrat zahlreiche Phasenbeugungselemente aneinandergereiht werden. Diese Methode führt jedoch zu unbefriedigenden Resultaten, weil sich einerseits an den Prägerändern zwischen geheizter Druckzone und ungeheizter druckloser Fläche ausserhalb des Prägebereiches störende Wülste ergeben und andererseits die verschiedenen Prägezonen nicht nahtlos aneinandergelegt werden können, da infolge der grossen thermischen Masse metallischer Prägematrizen am Rand einer neuen Prägung die Randzone der benachbarten alten Prägung zwangsläufig gelöscht wird.

Aus der CH-PS 594 495 ist es auch bekannt, auswählbare Bereiche einer eine Mikrostruktur aufweisenden Prägematrize dadurch abzuformen, dass die Prägematrize nur lokal aufgeheizt oder nur lokal auf das thermoplastische Substrat gepresst wird. Dabei entstehen jedoch keine scharf definierten Grenzen zwischen geprägten und ungeprägten Partien.

Der Erfindung liegt die Aufgabe zugrunde, ein Verfahren der im Oberbegriff des Anspruchs 1 genannten Art sowie eine Vorrichtung anzugeben, die es gestatten, durch Abformen ausgewählter Flächenbereiche einer eine Mikrostruktur aufweisenden Prägematrize auf ökonomische Weise ein Flächenmuster mit einer mikroskopischen Struktur zu schaffen, bei dem die Prägeränder scharf begrenzt sind und keine störenden Wülste aufweisen.

Die Verfahrenserfindung ist im Anspruch 1, die Vorrichtungserfindung ist im Anspruch 8 gekennzeichnet. Vorteilhafte Weiterbildungen ergeben sich aus den Unteransprüchen.

Nachfolgend werden Ausführungsbeispiele der Erfindung anhand der Zeichnung näher erläutert.

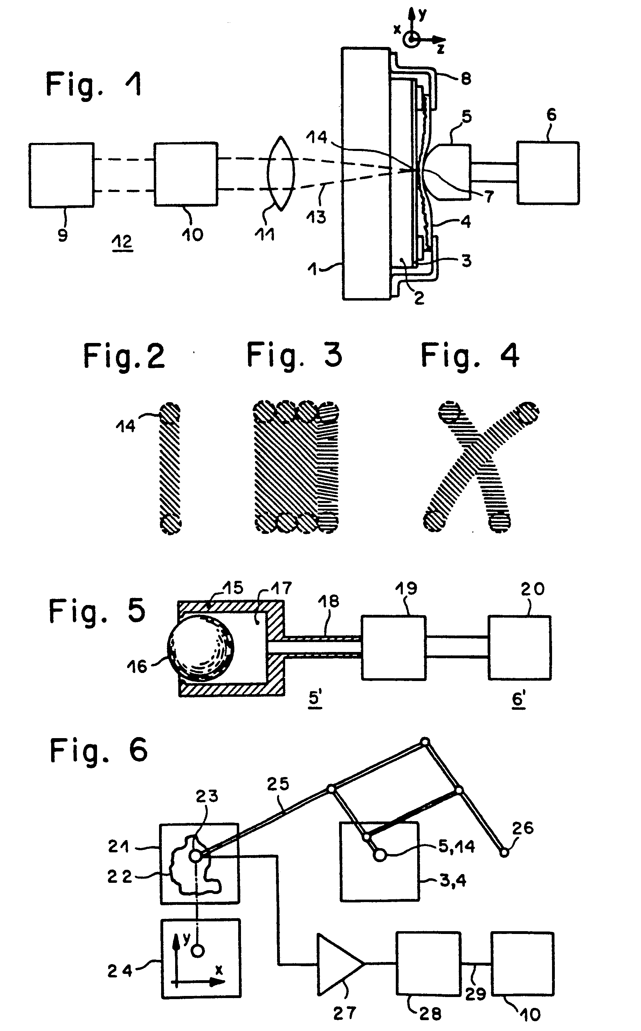

Es zeigen: Fig. 1 eine Prinzipdarstellung einer Vorrichtung zur Erzeugung eines Flächenmusters,
Fig. 2 bis 4 verschiedene Flächenmuster,
Fig. 5 einen Stempel und
Fig. 6 eine Prinzipdarstellung einer Vorrichtung zum Abtasten einer Mustervorlage.

In der nicht maßstäblich gezeichneten Fig. 1 bedeutet 1 eine ebene, starre und optisch transparente Druckplatte. Auf dieser ist auf nicht näher dargestellte Weise ein optisch transparentes Substrat 2 befestigt. Die der Druckplatte 1 abgewandte Oberfläche des Substrates 2 ist mit einer dünnen Schicht 3 aus thermoplastischem, strahlungsabsorbierendem Material beschichtet, in welche ein makroskopisches Flächenmuster mit einer mikroskopischen Struktur, insbesondere einer beugungsoptisch wirksamen Struktur, eingeprägt werden soll. Die Schicht 3 kann z. B. aus einer schwarz oder farbig eingefärbten Kunststoffolie bestehen. Sie kann auch durch Einfärben der Oberfläche des Substrates 2 z. B. mittels kolloidalen Kohlenstoffes in einer Kunststofflösung gebildet werden. Ihre typische Dicke beträgt 0,1 bis 10 µm.

Gegenüber der thermoplastischen Schicht 3 ist eine ungeheizte Prägematrize 4 angeordnet, die die zonenweise abzuformende Mikrostruktur aufweist, z. B. aus einer Nickellegierung besteht und vorteilhaft derart flexibel ist, dass mittels eines Stempels 5 ein flächenmässig eng begrenzter Prägedruck zwischen der Prägematrize 4 und der thermoplastischen Schicht 3 erzeugt werden kann. Die typische Dicke der Prägematrize beträgt 100 µm. Vorteilhaft weist der Stempel 5 eine konvexe Oberfläche mit einem typischen Krümmungsradius von etwa 7 mm auf. Mittels eines Druckgebers 6 wird der Stempel 5 auf die Prägematrize 4 und diese im Bereich einer kleinen Kontaktzone 7, deren typischer Durchmesser 3 mm beträgt, auf die thermoplastische Schicht 3 gepresst. Ein in der Fig. 1 nur schematisch angedeuteter Matrizenhalter 8 hält die Prägematrize 4 so, dass diese nur im Bereich der Kontaktzone 7 auf der thermoplastischen Schicht 3 aufliegt und im übrigen von dieser leicht distanziert ist. Der Matrizenhalter 8 ist vorteilhaft derart ausgebildet, dass die Prägematrize 4 mit wenigen einfachen Handgriffen oder sogar maschinell verdreht oder durch eine andere Prägematrize mit unterschiedlicher Mikrostruktur ersetzt werden kann, wenn sich der Druckgeber 6 in der Ruhelage befindet.

Auf der der Prägematrize 4 abgewandten Seite der Druckplatte 1 ist eine vorteilhaft aus einem Laser 9, einem optischen Modulator 10 und einem Linsensystem 11 bestehende Strahlenquelle 12 angeordnet, die einen gebündelten Wärme- oder Lichtstrahl 13 auf einen Brennfleck 14 im Bereich der thermoplastischen Schicht 3 fokussiert, der etwa im Zentrum der Kontaktzone 7 liegt. Durch Absorption des direkt einfallenden Strahls 13 und des an der Prägematrize 4 reflektierten Strahls wird die Schicht 3 im Bereich des Brennflecks 14 erhitzt. Der typische Durchmesser des Brennflecks 14 beträgt weniger als 100 μm. Mit Hilfe des Modulators 10 lässt sich der Wärme- oder Lichtstrahl 13 in seiner Energie steuern bzw. ein- und ausschalten.

Der Druckgeber 6 gestattet eine Verstellung des Stempels 5 in der z-Achse, die senkrecht zur Oberfläche der Teile 1 bis 4 liegt. Die beschriebenen Bauteile der Vorrichtung sind auf einer nicht dargestellten Grundplatte derart montiert, dass die Druckplatte 1, das Substrat 2 mit der thermoplastischen Schicht 3 und die Prägematrize 4 relativ zum Brennfleck 14 und Stempel 5 sowohl in der x-Achse als auch in der y-Achse, d. h. in einer zur thermoplastischen Schicht 3 parallelen Ebene, kontinuierlich oder schrittweise gegeneinander verschoben werden können. Hierzu können die Teile 1 bis 4 verschiebbar und die Teile 5 und 12 ortsfest montiert sein, oder umgekehrt. Es ist auch möglich, die Teile 1 bis 4 und 12 ortsfest anzuordnen und den Strahl 12 mittels eines Spiegelsystems der Bewegung des Stempels 5 in der x-y-Ebene nachzuführen.

Der Prägedruck wird mit Hilfe des Druckgebers 6 so eingestellt, dass sich die thermoplastische Schicht 3 in ihrem kalten Zustand im Bereich der Kontaktzone 7 nur elastisch deformierend der Mikrostruktur der Prägematrize 4 anpasst und beim Nachlassen des Prägedruckes wieder in den ursprünglichen, z. B. glatten Zustand relaxiert. Wird hingegen gleichzeitig mit dem Prägedruck der Strahl 13 eingeschaltet, so wird die strahlungsabsorbierende thermoplastische Schicht 3 in einem annähernd punktförmigen Flächenelement, das im Brennfleck 14 der Strahlenquelle 12 liegt, über die Erweichungstemperatur so weit erhitzt, dass sich in diesem Flächenelement ihre Oberfläche entsprechend der Mikrostruktur der Prägematrize 4 plastisch verformt und die eingeprägte Struktur nach Abkühlung beim Nachlassen des Prägedruckes erhalten bleibt. Das gewünschte Flächenmuster wird nun aus einer Vielzahl solcher Flächenelemente zusammengesetzt.

Im stationären Schreibmodus wird der Strahl 13 nur kurzzeitig eingeschaltet. Anschliessend kühlt sich das erhitzte Volumen der thermoplastischen Schicht 3 durch Wärmeleitung in die Prägematrize 4 und den Stempel 5 einerseits und in die Schicht 3 bzw. das Substrat 2 andererseits rasch ab. Der Druckgeber 6 bringt den Stempel 5 in die Ruhelage und trennt damit die Prägematrize 4 von der thermoplastischen Schicht 3. Im Bereich des Brennflecks 14 bleibt die eingeprägte Struktur erhalten. Nun wird dieses Prägeverfahren sukzessive wiederholt, indem zwischen den einzelnen Prägungen bei ausgeschalteter Strahlenquelle 12 und aufgehobenem Prägedruck das Substrat 2 mit seiner thermoplastischen Schicht 3 relativ zum Brennfleck 14 und Stempel 5 in der x-y-Ebene um einen bestimmten Betrag in einer bestimmten Richtung verschoben wird. Zwischen den einzelnen Prägungen kann die Prägematrize 4 ausgewechselt oder um einen bestimmten Betrag um die z-Achse verdreht werden. Dadurch lassen sich zusammenhängende oder voneinander isolierte Bereiche der Schicht 3 mit beliebigen mikroskopischen Strukturen versehen.

Im dynamischen Schreibmodus werden die Prägematrize 4 und das Substrat 2 mit der Schicht 3 bei eingeschalteter Strahlenquelle 12 und eingeschaltetem Druckgeber 6 gegenüber dem Brennfleck 14 und dem Stempel 5 mit bestimmter Geschwindigkeit kontinuierlich verschoben, so dass zusammenhängende bandförmige Flächenbereiche der Mikrostruktur der Prägematrize 4 abgeformt werden. Auch im dynamischen Schreibmodus können durch sukzessives Abformen beliebige Flächenmuster mit mikroskopischer Struktur erzeugt werden.

Die nach dem beschriebenen Verfahren erzeugten makroskopischen Flächenmuster können geometrische Figuren, Zahlen, Buchstaben, Ornamente, Guillochen usw. darstellen, deren mikrostropische Struktur ein einziges oder eine Vielzahl verschiedener Phasenbeugungsgitter, Phasenhologramme, Kinoforms und dergleichen bildet. So ist es beispielsweise möglich, in der thermoplastischen Schicht 3 auf ökonomische Weise ein komplexes Geflecht aus verschlungenen makroskopischen Linien mit beugungsoptisch wirksamer mikroskopischer Struktur zu erzeugen, wobei die mikroskopischen Strukturen von Linie zu Linie ändern oder sogar entlang einer Linie z. B. quasikontinuierlich variieren, so dass sich dem menschlichen Auge der Effekt von farbig bewegten Guillochenmustern ergeben. Das beschriebene Verfahren kann aber beispielsweise auch zur Erzeugung feinkonturierter Mikrostrukturen, wie sie im Gebiet der sog. Integrierten Optik Verwendung finden, angewandt werden.

Von dem auf der thermoplastischen Schicht 3 erzeugten Flächenmuster kann nach bekannten chemischen und galvanischen Verfahren ein Duplikat in Form einer metallenen Prägematrize hergestellt werden, die zur Massenreproduktion des Flächenmusters in einer konventionellen Prägevorrichtung eingesetzt wird.

Die Fig. 2 zeigt als einfaches Beispiel eines nach dem beschriebenen Verfahren hergestellten Flächenmusters ein schmales Band, das durch eine einzige Schreibbewegung in der y-Achse erzeugt wurde. Die Breite des Bandes ist etwa gleich oder wenig grösser als der Durchmesser des Brennflecks 14 und beträgt beispielsweise 50 μm. Die Struktur des Bandes bildet z. B. ein lineares Phasenbeugungsgitter mit 10 bis 2000 Linien pro Millimeter.

Durch Aneinanderreihen solcher Bänder gemäss der Fig. 3 können Flächenmuster beliebiger Grösse erzeugt werden, wobei die mikroskopischen Strukturen benachbarter Bänder nahtlos ineinander übergehen. Werden mehrere solche Bänder nebeneinandergereiht, ohne dabei die Prägematrize 4 relativ zur Schicht 3 zu bewegen, so entsteht, wie aus der Fig. 3 ersichtlich ist, eine mikroskopische Struktur, deren Strukturlinien nahtlos über mehrere Bänder laufen.

Gemäss der Fig. 4 kann eine erzeugte Struktur neu überschrieben werden. Dabei wird die alte Struktur gelöscht, falls die Energiedichte des Strahls genügend gross ist. Dies vereinfacht die Erzeugung komplexer Strukturen, da bei einem ersten Schreibvorgang nicht diejenigen Flächenbereiche ausgespart werden müssen, welche bei einem nachfolgenden zweiten Schreibvorgang mit einer anderen Struktur belegt werden sollen.

Durch genaues Dosieren der Energiedichte des Strahls 13 und der Schreibgeschwindigkeit ist es aber auch möglich, eine neue Struktur über eine alte Struktur zu prägen, ohne dass dabei die alte Struktur vollständig gelöscht wird.

Die Vorteile der Erfindung lassen sich nun leicht erkennen. Wie bereits erwähnt, können sowohl sehr feine linien- oder punktförmige Flächen als auch grössere zusammenhängende Flächenteile mit beugungsoptisch wirksamen Mikrostrukturen ohne sichtbare Nahtlinien durch Aneinanderschreiben oder teilweises Überschreiben belegt werden. Die Struktur der einzelnen Flächenelemente solcher Flächenmuster kann identisch sein oder von Element zu Element variieren. Es können auch Mikroprofile abgeformt werden, die sich durch interferometrische Methoden nicht erzeugen lassen. Die Prägeränder sind scharf begrenzt und weisen keine störenden Wülste auf. Generell ergibt sich durch das beschriebene Verfahren erstmals die Möglichkeit, feinkonturierte Mikrostrukturen frei von der Bindung an starre Maskensysteme zu synthetisieren, wobei der Verfahrensablauf durch numerische Programmierung und Steuerung vollständig automatisiert werden kann.

Wird der Prägedruck mittels des Stempels 5 ausschliesslich im Bereich des Brennflecks 14 erzeugt, so werden unerwünschte partielle Kaltverformungen der Schicht 3 beim Druckkontakt mit der Prägematrize 4 an Stellen, wo die Mikrostruktur der Prägematrize 4 nicht abgeformt werden soll, während der Gesamtprägezeit bezüglich Dauer und Häufigkeit auf das unbedingt Notwendige reduziert. Ferner wird dadurch der Matrizenwechsel erleichtert und im Vergleich zur ganzflächigen Druckerzeugung ergeben sich wesentlich kleinere Prägekräfte, was die mechanische Auslegung der Vorrichtung erleichtert.

In der Fig. 5 ist ein Stempel 5' dargestellt, der aus einem Kugelhalter 15 und einer Kugel 16 besteht. Die Kugel 16 liegt mit geringem Spiel in einem zylindischen Raum 17 des Kugelhalters 15. Die Längsachse des zylindrischen Raumes 17 fällt mit der z-Achse (Fig. 1) zusammen. Ein Teil der Kugel 16 ragt aus dem Kugelhalter 15 heraus und bildet die konvexe Oberfläche des Stempels 5'. Der Raum 17 ist über eine Druckluftleitung 18 und ein Magnetventil 19 mit einer als Druckgeber 6' wirkenden Druckluftquelle 20 verbunden.

Der Luftüberdruck im Raum 17 presst die Kugel 16 gegen die Prägematrize 4 (Fig. 1), kann durch das Magnetventil 19 ein- und ausgeschaltet werden und lässt sich in weiten Grenzen fein variieren, was eine genaue Justierung des Prägedrucks erlaubt. Die automatisierte Abschaltung des Prägedrucks durch das Magnetventil 19 ermöglicht auf einfache Weise das Auswechseln, Drehen oder Verschieben der Prägematrize 4. Die seitliche Luftlagerung der Kugel 16 gewährleistet einen geringen Rollwiderstand. Die Leckluft, die zwischen der Kugel 16 und den zylindrischen Wänden der Kugelführung entweicht, ergibt eine Luftkühlung der Kugel 16.

In der Fig. 6 bedeutet 21 eine graphische Mustervorlage, deren makroskopisches Flächenmuster 22 mittels eines optoelektronischen Abtasters 23 abgetastet und als makroskopisches Flächenmuster mit mikroskopischer Struktur auf der Schicht 3 (Fig. 1) maßstabgetreu wiedergegeben wird. Eine Verschiebeeinheit 24 führt den aus Lichtquelle, Linsensystem und Lichtdetektor (nicht gezeichnet) bestehenden Abtaster 23 z. B. Zeile für Zeile über die Mustervorlage 21. Synchron dazu werden der Brennfleck 14 und der Stempel 5 gegenüber der Schicht 3 und der Prägematrize 4 verschoben. In der Zeichnung ist dies durch ein Hebelsystem in Form eines Pantographen 25 angedeutet, der durch die Verschiebeeinheit 24 bewegt und dabei um einen festen Drehpunkt 26 gedreht wird. Der elektrische Ausgang des Abtasters 23 ist über einen Verstärker 27 und einen Schwellenschalter 28 mit einem Steuereingang 29 des Modulators 10 der Strahlenquelle 12 verbunden.

Übersteigt die lokale Reflektivität der Mustervorlage 21 einen vorbestimmten Wert, so wird der Modulator 10 geöffnet, so dass an den korrespondierenden Stellen der Schicht 3 die Mikrostruktur der Prägematrize 4 abgeformt wird. Bei unterhalb des vorbestimmten Wertes liegender Reflektivität erfolgt dagegen weder eine bleibende Abformung der Mikrostruktur noch eine Löschung einer allenfalls früher geprägten Struktur.

Der Modulator 10 kann auch so gesteuert werden, dass eine Prägung nicht bei hoher, sondern bei geringer Reflektivität der Mustervorlage 21 stattfindet. Ferner kann der Modulator 10 graduell statt binär angesteuert werden, wobei die Abhängigkeit der Energie des Strahls 13 von der Reflektivität der Mustervorlage 21 linear oder nichtlinear sein kann. Die graduelle Ansteuerung des Modulators 10 ergibt eine Modulation der Breite der geprägten Flächenelemente.

**Patentansprüche**

1. Verfahren zur Erzeugung eines makroskopischen Flächenmusters mit einer mikroskopischen Struktur, insbesondere einer beugungsoptisch wirksamen Struktur, durch Abformen ausgewählter Flächenbereiche einer eine Mikrostruktur aufweisenden Prägematrize (4) in eine thermoplastische Schicht (3), dadurch gekennzeichnet, dass mittels einer Strahlenquelle (12) ein in ihrem Brennfleck (14) liegendes, annähernd punktförmiges Flächenelement der thermoplastischen Schicht (3) erhitzt wird, so dass die Mikrostruktur der Prägematrize (4) nur in diesem Flächenelement plastisch abgeformt wird, und dass das Flächenmuster aus einer Vielzahl solcher Flächenelemente zusammengesetzt wird.

2. Verfahren nach Anspruch 1, dadurch gekennzeichnet, dass ausschliesslich in Bereich des Brennflecks (14) ein Prägedruck erzeugt wird.

3. Verfahren nach Anspruch 2, dadurch gekennzeichnet, dass der Prägedruck im Bereich des Brennflecks (14) mittels eines Stempels (5; 5′) mit konvexer Oberfläche erzeugt wird.

4. Verfahren nach einem der Ansprüche 1 bis 3, dadurch gekennzeichnet, dass durch kontinuierliches Verschieben der Prägematrize (4) und der thermoplastischen Schicht (3) relativ zum Brennfleck (14) zusammenhängende bandförmige Flächenbereiche der Mikrostruktur der Prägematrize (4) abgeformt werden.

5. Verfahren nach einem der Ansprüche 1 bis 3, dadurch gekennzeichnet, dass die thermoplastische Schicht (3) bei ausgeschalteter Strahlenquelle (12) und aufgehobenem Prägedruck relativ zum Brennfleck (14) schrittweise verschoben wird.

6. Verfahren nach Anspruch 5, dadurch gekennzeichnet, dass bei Verschieben die Prägematrize (4) gedreht oder ausgewechselt wird.

7. Verfahren nach einem der Ansprüche 1 bis 6 dadurch gekennzeichnet, dass mittels eines optoelektronischen Abtasters (23) eine Mustervorlage (21) abgetastet, synchron dazu die Prägematrize (4) und die thermoplastische Schicht (3) relativ zum Brennfleck (14) verschoben und die Strahlenquelle (12) in Abhängigkeit vom Ausgangssignal des Abtasters (23) so gesteuert wird, dass an korrespondierenden Stellen der Schicht (3) die Mikrostruktur der Prägematrize (4) nur dann abgeformt wird, wenn die lokale Reflektivität der Mustervorlage (21) einen vorbestimmten Wert übersteigt.

8. Vorrichtung zur Durchführung des Verfahrens nach einem der Ansprüche 1 bis 7, mit einer ebenen, starren Druckplatte (1), einem Substrat (2) mit einer thermoplastischen Schicht (3), einer Prägematrize (4) und einem Stempel (5; 5′), dadurch gekennzeichnet, dass die Druckplatte (2) transparent ist, dass auf der dem Stempel (5) gegenüberliegenden Seite der Druckplatte (2) eine Strahlenquelle (12) angeordnet ist, deren Brennfleck (14) ein annähernd punktförmiges Flächenelement der thermoplastischen Schicht (3) erhitzt, dass der Stempel (5; 5′) eine konvexe Oberfläche aufweist und ausschliesslich im Bereich des Brennflecks (14) einen Prägedruck erzeugt und dass die Prägematrize (4) und die thermoplastische Schicht (3) relativ zum Brennfleck (14) und Stempel (5; 5′) in einer zu thermoplastischen Schicht (3) parallelen Ebene verschiebbar angeordnet sind.

9. Vorrichtung nach Anspruch 8, dadurch gekennzeichnet, dass der Stempel (5′) aus einem Kugelhalter (15) und einer Kugel (16) besteht, dass die Kugel (16) in einem zylindrischen Raum (17) des Kugelhalters (15) angeordnet ist und dass der zylindrische Raum (17) über eine Druckluftleitung (18) an eine Druckluftquelle (20) angeschlossen ist.

10. Vorrichtung nach Anspruch 8 oder 9, dadurch gekennzeichnet, dass eine Verschiebeeinheit (24) vorgesehen ist, die einen optoelektronischen Abtaster (23) über eine Mustervorlage (21) führt und synchron dazu die Prägematrize (4) und die thermoplastische Schicht (3) relativ zum Brennfleck (14) und Stempel (5; 5′) verschiebt, und dass der elektrische Ausgang des Abtasters (23) über einen Schwellwertschalter (28) mit einem Steuereingang (29) eines Modulators (10) für die Energie des von der Strahlenquelle (12) ausgehenden Strahls (13) verbunden ist.

**Claims**

1. A process for the production of a macroscopic surface pattern with a microscopic structure, in particular a structure which has an optical-diffraction effect, by bulding selected surface regions of an embossing die (4) having a microstructure into a thermoplastic layer (3), characterised in that a ray source (12) is used to heat an approximately punctiform element of the surface of the thermoplastic layer (3), which element lies in the focal spot (14) of the ray source, so that the microstructure of the embossing die (4) is plastically moulded only in said element of the surface of the thermoplastic layer, and that the surface pattern is composed of a plurality of such elements of the surface.

2. A process according to claim 1 characterised in that an embossing pressure is produced exclusively in the region of the focal spot (14).

3. A process according to claim 2 characterised in that the embossing pressure is produced in the region of the focal spot (14) by means of a punch (5; 5') having a convex surface.

4. A process according to one of claims 1 to 3 characterised in that continuous surface regions in strip form of the microstructure of the embossing die (4) are moulded by continuous displacement of the embossing die (4) and the thermoplastic layer (3) relative to the focal spot (14).

5. A process according to one of claim 1 to 3 characterised in that, when the ray source (12) is switched off and the embossing pressure removed, the thermoplastic layer (3) is displaced with a stepwise movement relative to the focal spot (14).

6. A process according to claim 5 characterised in that in the displacement operation the embossing die (4) is turned or exchanged.

7. A process according to one of claim 1 to 6 characterised in that a pattern original (21) is scanned by means of an opto-electronic scanning means (23), in synchronous relationship therewith the embossing die (4) and the thermoplastic layer (3) are displaced relative to the focal spot (14) and the ray source (12) is controlled in dependence on the output signal of the scanning means (23) in such a way that the microstructure of the embossing die (4) is moulded at corresponding locations on the layer (3) only when the local reflectivity of the pattern original (21) exceeds a predetermined value.

8. Apparatus for carrying out the process according to one of claim 1 to 7 comprising a flat rigid pressure plate (1), a substrate (2) with a thermoplastic layer (3), an embossing die (4) and a punch (5; 5'), characterised in that the pressure plate (2) is transparent, that arranged on the side of the pressure plate (2) in opposite relationship to the punch (5) is a ray source (12) whose focal spot (14) heats an approximately punctiform element of the surface of the thermoplastic layer (3), that the punch (5; 5') has a convex surface and produces an embossing pressure exclusively in the region of the focal spot (14) and that the embossing die (4) and the thermoplastic layer (3) are arranged displaceably relative to the focal spot (14) and the punch (5; 5') in a plane parallel to the thermoplastic layer (3).

9. Apparatus according to claim 8 characterised in that the punch (5') comprises a ball holder (15) and a ball (16), that the ball (16) is arranged in a cylindrical space (17) in the ball holder (15) and that the cylindrical space (17) is connected to a compressed air source (20) by way of a compressed air conduit (18).

10. Apparatus according to claim 8 or claim 9 characterised in that there is provided a displacement unit (24) which guides an optoelectronic scanning means (23) over a pattern original (21) and in synchronous relationship therewith displaces the embossing die (4) and the thermoplastic layer (3) relative to the focal spot (14) and the punch (5; 5'), and that the electrical output of the scanning means (23) is connected by way of a threshold switch (28) to a control input (29) of a modulator (10) for the energy of the ray (13) emitted by the ray source (12).

**Revendications**

1. Procédé de fabrication d'un motif de surface macroscopique à structure microscopique, en particulier d'une structure de diffraction optique, par modelage dans une couche thermoplastique (3) de zones choisies du surface d'une matrice d'estampage (4) qui présente une microstructure, caractérisé en ce qu'au moyen d'une source de rayonnement (12) on chauffe un élément de surface approximativement ponctuel de la couche thermoplastique (3) situé dans le foyer (14) du rayonnement, de sorte que la microstructure de la matrice d'estampage (4) n'est modelée plastiquement que dans cet élément de surface, et que le motif de surface est constitué de plusieurs éléments de surface de ce type.

2. Procédé selon la revendication 1, caractérisé en ce que l'on exerce une pression de matriçage exclusivement dans la 20 une du foyer (14).

3. Procédé selon la revendication 2, caractérisé en ce que la pression d'estampage dans la zone du foyer (14) est exercée au moyen d'un poinçon (5; 5') à surface supérieure convexe.

4. Procédé selon l'une des revendications 1 à 3, caractérisé en ce que par coulissement continu de la matrice d'estampage (4) et de la couche thermique (3) par rapport au foyer (14) on modèle des zones de surface continues en forme de bandes de la microstructure de la matrice d'estampage (4).

5. Procédé selon l'une des revendications 1 à 3, caractérisé en ce que la couche thermoplastique (3) après arrêt de la source de rayonnement (12) et relâchement de la pression de matrice coulisse pas à pas par rapport au foyer (14).

6. Procédé selon la revendication 5, caractérisé en ce que lors du coulissement on tourne ou change la matrice d'estampage (4).

7. Procédé selon l'une des revendications 1 à 6, caractérisé en ce qu'au moyen d'un analyseur optoélectronique (23) on analyse un dessin original (21), que de façon synchrone à cette analyse on coulisse la matrice d'estampage (4) et la couche thermoplastique (3) par rapport au foyer (14) et que l'on commande la source de rayonnement (12) en fonction du signal de sortie de l'analyseur (23) façon telle qu'à des emplacements correspondants de la couche (3) la microstructure de la matrice d'estampage (4) n'est modelée que lorsque la réflectivité locale du dessin original (21) dépasse une valeur predéterminée.

8. Dispositif pour mettre en oeuvre le procédé selon l'une des revendications 1 à 7, avec une plaque de pression (1) plane, rigide, un substrat (2) avec une couche thermoplastique (3), une matrice d'estampage (4) et un poinçon (5; 5'), caractérisé en ce que la plaque de pression (1) est transparente, que sur la face de la plaque de pression (2) opposée au poinçon (5) est disposée une source de rayonnement (12), dont le foyer (14) chauffe un élément approximativement ponctuel de la couche thermoplastique (3), en ce que le poinçon (5; 5') présente une surface supérieure convexe et exerce une pression de matriçage exclusivement dans la zone du foyer (14) et en ce que la matrice d'estampage (4) et la couche thermoplastique (3) sont agencées de façon coulissante par rapport au foyer (14) et au poinçon (5; 5') dans un plan parallèle à la couche thermoplastique (3).

9. Dispositif selon la revendication 8, caractérisé en ce que le poinçon (5') se compose d'un porte-bille (15) et d'une bille (16), que la bille (16) est disposée dans un espace cylindrique (17) du porte-bille (15), et que l'espace cylindrique (17) est relié par une conduite d'air comprimé (18) à une source d'air comprimé (20).

10. Dispositif selon la revendication 8 ou 9, caractérisé en ce qu'on dispose une unité de coulissement (24), qui entraîne un analyseur optoélectronique (23) au-dessus d'un dessin original (21) et qui de façon synchrone avec ceci coulisse la matrice d'estampage (4) et la couche thermoplastique (3) par rapport au foyer (14) et au poinçon (5; 5'), et en ce que la sortie électrique de l'analyseur (23) est reliée par un commutateur de seuil (28) avec une entrée de commande (29) d'un modulateur (10) de l'énergie du rayonnement sortant de la source de rayonnement.

**Fig. 1**

**Fig.2**   **Fig. 3**   **Fig. 4**

**Fig. 5**

**Fig. 6**